Europäisches Patentamt

European Patent Office

Office européen des brevets

(11) Publication number: **0 103 401**
A2

# EUROPEAN PATENT APPLICATION

(21) Application number: 83304609.7

(22) Date of filing: 09.08.83

(51) Int. Cl.³: **G 11 B 7/24**, G 03 C 5/00

(30) Priority: 18.08.82 JP 143762/82

(43) Date of publication of application: 21.03.84
Bulletin 84/12

(84) Designated Contracting States: DE FR GB

(71) Applicant: KONISHIROKU PHOTO INDUSTRY CO. LTD.,
No. 26-2, Nishishinjuku 1-chome Shinjuku-ku,
Tokyo 160 (JP)

(72) Inventor: Hoga, Kinu, No. 5-406, 4-10-1, Osakaue,
Hino-shi Tokyo (JP)
Inventor: Shimada, Fumio, 3-5-20, Kawasaki
Hamuramachi, Nishitama-gun Tokyo (JP)
Inventor: Nishi, Shinichi, 5-2-1, Hinodai, Hino-shi Tokyo
(JP)
Inventor: Satoh, Taxey, 2-5-19, Owadacho, Hachioji-shi
Tokyo (JP)

(74) Representative: Burnside, Michael et al, c/o Michael
Burnside & Partners 2 Serjeants' Inn Fleet Street,
London EC4Y 1HL (GB)

(54) **Recording media.**

(57) Recording medium wherein a high density energy beam is irrasiated onto a reflective component-containing layer provided over a support through the support to reduce a reflectivity of the reflective component-containing layer characterized in that the reflective component-containing layer is formed through physical development nucleus layer and has a film thickness of 0.01 to 0.5 μm.

This improved recording medium show higher and easier writing and reading properties.

- 1 -

Recording media

This invention relates to a recording medium. More particularly, it is concerned with an improved optical recording medium which is capable of writing or recording and reflective reading.

As a recording medium which is employable for the method wherein such information as voice, projected image and so on is recorded as change in shape, dimension and the like of pits (concave portion) or blocks (convex portion), and optically taken out and reconverted to voice or projected image signal for reproduction, there has been hitherto proposed a recording medium employing a photosensitive silver halide emulsion, for example, as disclosed in Japanese Provisional Patent Publications No. 108995/1980, No. 33995/1981, No. 49296/1981 or No. 49297/1981. Said recording medium has advantages of being continuously manufacturable and of comparatively less recording energy applied, unlike those recording media which are composed of Te, TeO, chalcogenide compounds and the like and prepared by means of such vacuum equipments as vacuum plating or sputtering. Moreover, they also show an advantage that track or certain data can be photographically recorded previously by utilizing photosensitivity of the silver halide emulsion. In summary, the technique as disclosed in the above-recited Publications is directed mainly to a recording medium wherein a recording layer surface on a support is of reflectivity.

0103401

On the other hand, it is requisite for a recording medium to prepare a protective coating layer of $SiO_2$, polymethyl methacrylate (PMMA) and the like on a recording medium or to prepare the whole recording medium in the form of a capsule, in order to protect pits of the recording layer surface from dust. Accordingly, there is required the step of coating a protective layer or forming a capsule and a method for recording through a transparent support such as PMMA, glass or the like is usually applied in order to avoid the above complicated procedures, whereupon it is known to use a recording medium overlaying one sheet of a recording medium with the other layer so as to place outside the transparent supports.

A method for recording through a support by the use of an optical recording medium is disclosed in Japanese Provisional Patent Publications No. 49296/1981, No. 49297/ 1981 and No. 189060/1981, but there could not be found any disclosure therein on a method or medium wherein a reflectivity in the vicinity of an interface between a support and a recording layer becomes increased and thus a practically acceptable reflectivity is producible in the vicinity of said interface.

Under these circumstances, the present inventors had previously proposed that a physical development nucleus layer is coated over said support to increase a reflectivity in the vicinity of an interface between a support and a recording layer and produce a practically acceptable reflectivity in the vicinity of said interface for easier reading through a support, as disclosed and claimed in our co-pending Japanese Patent Application No. 189060/1981 (which corresponds to U.S. Patent Application Serial No. 443,434 and European Patent Application No. 82 306 330), which is incorporated herein for reference. Our previous recording medium could show a sufficient reflectivity required for reading information with a

0103401

reflected light through a support and representing said information as signal contrast.

As a result of our further studies on such a type of recording medium, it has been found out that there remains a disadvantage in its manufacture wherein a reflection on a support side could not yet be sufficiently increased due to physical development being initiated from the surface of a physical development nucleus layer, although the aforesaid advantages can be well seen.

Then, it is a primary object of this invention to provide a recording medium capable of writing (or recording) and reading through a support by utilizing a reflectivity at an interface between a support and a recording layer wherein a higher reflectivity can be attained through a support and an optical reading can be well accomplished.

Another object of this invention is to provide a recording medium with easier writing and higher sensitivity.

Still another object of this invention is to provide a recording medium which can be prepared in a continuous manner without any need for vacuum equipments.

These objects can be satisfactorily accomplished by an improved recording medium of this invention. The present recording medium is the recording medium wherein an energy beam is irradiated onto a reflective component-containing layer provided on a support through said support to reduce a reflectivity of said reflective component-containing layer, the improvement wherein said reflective component-containing layer is formed through physical development of a physical development nucleus-containing layer on said support and said reflective component-containing layer has a film

0103401

thickness of 0.01 μm to 0.5 μm.

In the present recording medium, uneveness of coating tends to occur and it becomes thus difficult to prepare a uniform or even film thickness by coating if said film thickness is less than 0.01 μm, while, if said film thickness is more than 0.5 μm, a reflectivity of the recording medium becomes reduced, which leads to difficulty in optical reading and lowered signal contrast. In the present invention, the film thickness of less than about 0.2 μm is preferably used. More preferably, the film thickness of less than 0.09 μm is used to obtain the good results of the present invention.

Moreover, the present recording medium can show, as one of its characteristics, an increased reflectance along with a higher sensitivity for recording.

For preparing the present recording medium, one may employ, for instance, the following procedures: a physical development nucleus layer substantially transparent to an energy beam is first provided over a support such as glass substantially transparent to said energy beam and subsequently a metal atom is provided by physical development, thereby forming a reflective component-containing layer having a reflective and metallic luster surface and containing a reflective component therein even near the interface between said support and said layer. In this instance, it is preferable for prevention of thermal diffusion that said reflective component-containing layer, i.e. said reflective metallic luster layer and said interface are not of electric conductivity. This physical development nucleus layer may be of a relief-like shape.

Now, the present invention is illustrated in detail with reference to the accompanied drawings.

Fig. 1 is a graph showing a relationship between a film thickness of a recording layer in the sample in Example 1 and a reflectance through a support;

Fig. 2 is a graph showing a relationship between a film thickness of said recording layer and signal contrast;

Fig. 3 is a chart of silver analysis toward thickness according to an electron spectroscopy for chemical analysis (ESCA), namely a spectrum by ESCA of the sample in Example 2 after sputtering by means of PHI ESCA/SAM 560; and

Fig. 4 is a chart of profile toward thickness (Depth Profile) obtained in a similar manner to Fig. 3.

In this invention, as a method for forming a physical development nucleus-containing layer over a base or support, there may be satisfactorily utilized blade coating, air-knife coating, bar coating, roll coating, curtain coating, spinner coating and so on.

As the physical development nucleus which may be employed in the present physical development nucleus-containing layer, there may be employed any well-known physical development nuclei.  For instance, a group thereof may preferably include heavy metal sulfides, e.g. sulfides of zinc, chromium, potassium, iron, cadmium, cobalt, nickel, lead, antimony, bismuth, silver, cerium, arsenic, copper and rhodium, as well as selenides of heavy metals, e.g. selenides of lead, zinc, antimony and nickel.

Another useful group of physical development nucleus may include noble metals, e.g., silver, gold, platinum, palladium, mercury and the like and it is preferable that said metal is present as colloidal particles in a binder. Also, salts of said metals, preferably the corresponding simple inorganic and readily reducible salts such as silver nitrate, gold chloride, gold nitrate and the like are useful as a physical development nucleus.

Other useful group of physical development nucleus may include thio compounds, e.g. silver thiooxalate and lead or nickel complex thereof, thioacetamide and the like.

Preferable physical development nucleus is a heavy metal sulfide, e.g. sulfides of zinc, cadmium, silver, lead and the like and a metal, e.g. silver, gold, palladium, copper and the like.

As the metallic compound which may be used for supplying a metal atom to a physical development nucleus through physical development, there may be employed a gold salt, e.g. sodium salt; a copper salt, e.g. $CuCl_2$, CuSCN; a lead salt, e.g. PbO, $PbCl_2$, $PbBr_2$; an iron salt, e.g. iron oxalate, iron nitrate; a Pd complex, e.g. oxalate, malonate; a silver salt, e.g. AgCl, AgBr, AgI, $AgNO_3$, $Ag_2SO_4$, $Ag_2S$; a cobalt salt, e.g. $CoCl_2$, $CoSO_4$; a nickel salt, e.g. $Ni(NO_3)_2$, $NiCl_2$; $HgCl_2$, $BiCl_2$, $TeCl_4$, $InCl_3$, $InBr_3$; and the like and the silver salt, copper salt, nickel salt and cobalt salt can be preferably employed in this invention with a silver halide being most preferable. In this instance, a silver halide and a copper halide may also show an advantage of non-pollution.

In this invention, physical development can be effected with a physical developer in a well-known manner. As the physical developer, there may be include all developers already known in the art; namely, any alkaline or acidic solutions containing at least a developing agent, and there may be employed any of well-known developpng solutions.

As the support which may be employed in this invention, there may be used any of those which are substantially transparent to energy beam and illustrative examples thereof may include cellulose triacetate, polyethylene terephthalate, polymethyl methacrylate, polycarbonate, ceramics, polyimide resin, glasses, metals and the like. The support may be particularly undercoated or not, but the undercoated support is preferable. As the undercoating agent for this purpose, there may be employed, for example, silane coupling agents, silicates, titanium coupling agents and the like and the silane coupling agent disclosed in U.S. Patent No. 3,661,584 is particularly preferable.

Also, the support may be subjected to surface treatment, e.g., corona discharge treatment, plasma discharge treatment, ion bombardment and the like for improving adhesion.

Where a silver halide emulsion is used as the metallic compound in this invention, it is desirable to incorporate therein an antifoggant, a coating aid, a hardener and the like, but it is not necessarily required to apply thereto a sensitizing treatment because of no need for sensitivity to visible light. Also, it is feasible to add a developing agent, e.g. hydroquinone or phenidone directly to a silver halide emulsion and subsequently develop it solely in an alkali bath containing a solvent for a silver halide, thereby precipitating out silver in a silver mirror-like form.

As the binder which may be employed in this invention, there may be employed any well-known hydrophilic colloids and illustrative examples thereof may include, for example, gelatin, alkali-processed gelatin, acid-processed gelatin and gelatin derivatives; colloidal albumin; casein; cellulose derivatives, e.g. carboxymethyl cellulose, hydroxyethyl cellulose and the like;

polysaccharide derivatives, e.g. soldium alginate, starch derivatives and the like; synthetic hydrophilic polymers, e.g. polyvinyl alcohol, poly-N-vinylpyrrolidone, polyacrylic acid copolymers, polyacrylamide and the like. As other binder, there may be also mentioned phenol resins, epoxy resins, melamine resins and the like. If necessary, these binders may be employed in combination of the two or more. As the aforesaid colloid dispersion medium for this invention, one may preferably use a hydrophilic colloid with a low thermal conductivity.

As the high density energy beam which may be employed in this invention for recording pit information, there may be employed, for example, any of well-known beams, but laser light is preferable in view of higher density recording. As the laser beam, there may be employed any light from continuous oscillation or pulse oscillation and, illustratively, there may be used ruby laser (6943 Å), argon ion laser (4880 Å, 5145 Å), glass laser (1.06 μ), He-Ne laser (6328 Å), krypton laser (6471 Å), He-Cd laser (4416 Å, 3250 Å), color laser, semi-conductor laser and the like.

The present recording medium may be heat-treated, if necessary, in the presence or absence of oxygen for increasing reflectivity and reducing a film thickness. A preferable temperature range therefor is about 250 $^{\circ}$C to 400 $^{\circ}$C. Heat-treatment can provide a higher improvement in reflectivity performance of a metallic luster layer and an interface.

A film thickness of a physical development nucleus layer in the present recording medium should be in the range of 0.01 μm to 0.5 μm. In the above-defined film thickness range, the present recording medium can be provided with a reflectance of approximately 10 to 70 % through a support by means of He-Ne laser (6328 Å) and thus is a

0103401

satisfactory recording medium. If a reflectance is less than 10 %, there occur a lowered signal contrast and reading of information by reflected light becomes difficult. If a reflectance is more than 70 %, writing or recording becomes difficult to be effected, together with a lowered signal contrast.

The present recording medium may be practically applicable as an optical disc capable of additionally writing thereinto and also as a tape for additional writing. In view of a transparent support employed as a protective layer, the present recording medium may be widely and effectively utilized for a number of purposes.

Other embodiments of the present invention, for example, contruction of layers therein, practical process for the preparation thereof etc. can be advantageously carried out in compliance with those as disclosed in the above-mentioned co-pending Japanese Patent Application No. 189060/1981, all descriptions and drawings of which are incorporated herein for reference.

This invention will be more fully illustrated by way of the following examples, but they are not contemplated to be limiting the scope of this invention.

Example 1

An aqueous solution of colloidal silver grains dispersed in gelatin as a physical development nucleus was prepared by reduction of silver nitrate with dextrin. A weight ratio of silver to gelatin was 32 % and a grain size of the colloidal grain was about 100 Å. This solution was coated by means of a wire bar over a polymethyl methacrylate plate with a thickness of 1.0 mm, said plate being previously executed undercoating treatment by the use of a plasma discharge and a silane coupling agent, thereby

0103401

forming physical development nucleus layers with a variety of film thicknesses. Over the physical development nucleus-containing layer was coated a fine grain silver iodobromide gelatin emulsion as a metallic compound dispersed layer (3 molar % as silver iodide; average grain size of 0.05 μ) to a coated silver amount of 3 g/m$^2$, thereby producing a sample.

This sample was developed without exposure at 40 $^{o}$C for 2 minutes with a developer having the following composition, washed with a hot water at 35 $^{o}$C to strip off the emulsion layer and then washed with water.

Developer

| | |
|---|---|
| Phenidone | 1.0 g |
| Anhydrous sodium sulfite | 65.0 g |
| Hydroquinone | 12.0 g |
| KOH | 15.0 g |
| KBr | 0.5 g |
| Sodium thiosulfate | 5.0 g |
| Water added to make up 1 ℓ and then | |
| 120.0 g of sodium sulfate added. | |

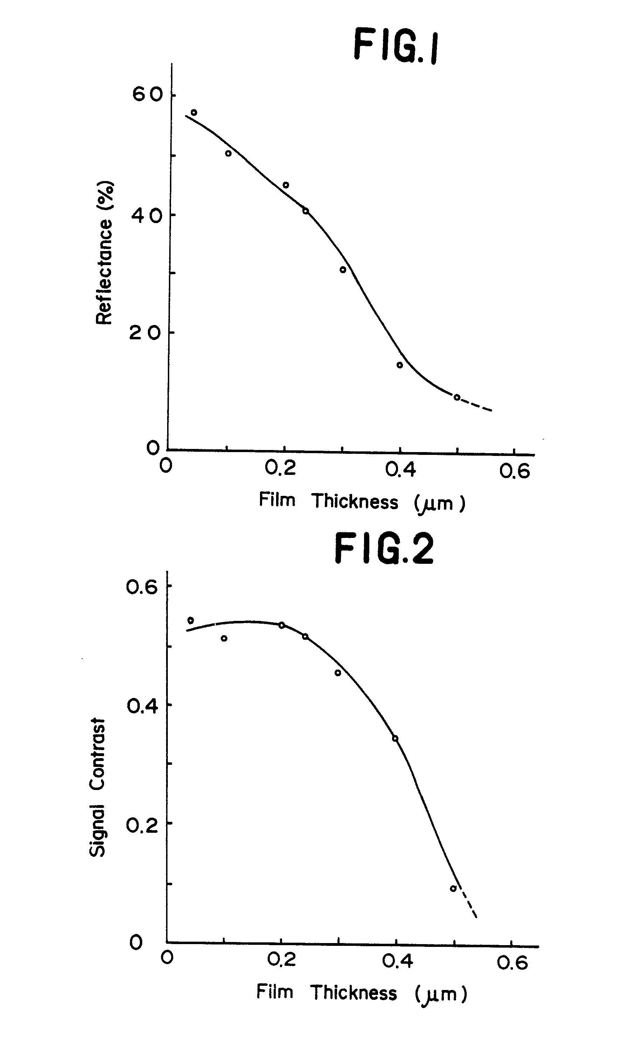

Consequently, observation through the polymethyl methacrylate support plate showed production of a siliver mirror having metallic luster and a silver mirror layer was confirmed to exist at the interface between the support. A relationship between a film thickness of the recording layer and a reflectance through the support at this point is illustrated in Fig. 1.

As apparent from Fig. 1, it can be seen that the thinner a film thickness of the resultant recording layer is, the higher a reflectance becomes. It can be also seen in the present recording medium that any required reflectance may be provided by controlling a film thickness of the recording layer, i.e. physical development nucleus layer. This is significant because of any optionally possible control of a writing energy.

To the present recording medium sample thus obtained was scanned a He-Ne laser beam (6328 Å) having a beam diameter of 1.4 μ and an output on a recording surface of 18.9 mW at a scanning rate of 4.9 m/sec using a rotating mirror and a pulse signal of 500 n sec was given with an acoustic optical modulator to effect a writing recording for forming pits. As a result, a recording surface having a remarkable difference in reflectivity was formed to provide a favourable signal contrast and make feasible an easy optical reading. A relationship between film thickness and signal contrast at this point is illustrated in Fig. 2.

As apparent from Fig. 2, it can be seen that the thinner a film thickness is, the higher signal contrast is, and also that favourable results can be given at a film thickness of 0.01 μm to 0.5 μm. Illustratively, a threshold energy value for writing was 6 mW and signal contrast was 0.52 in a sample having a film thickness of 0.24 μm and a reflectance of 41 %.

Comparative Example 1

Following the same procedures as in Example 1, there was prepared a sample having a recording layer with a film thickness of 1.0 μm. This recording medium has a low reflectance of 9 % with many noises and then optical reading was difficult.

Comparative Example 2

Following the same procedures as in Example 1, there was prepared a recording medium having a recording layer with

0103401

a film thickness of 0.009 µm. This recording medium showed a high uneveness in coating and thus did not provide a satisfactory sample.

## Example 2

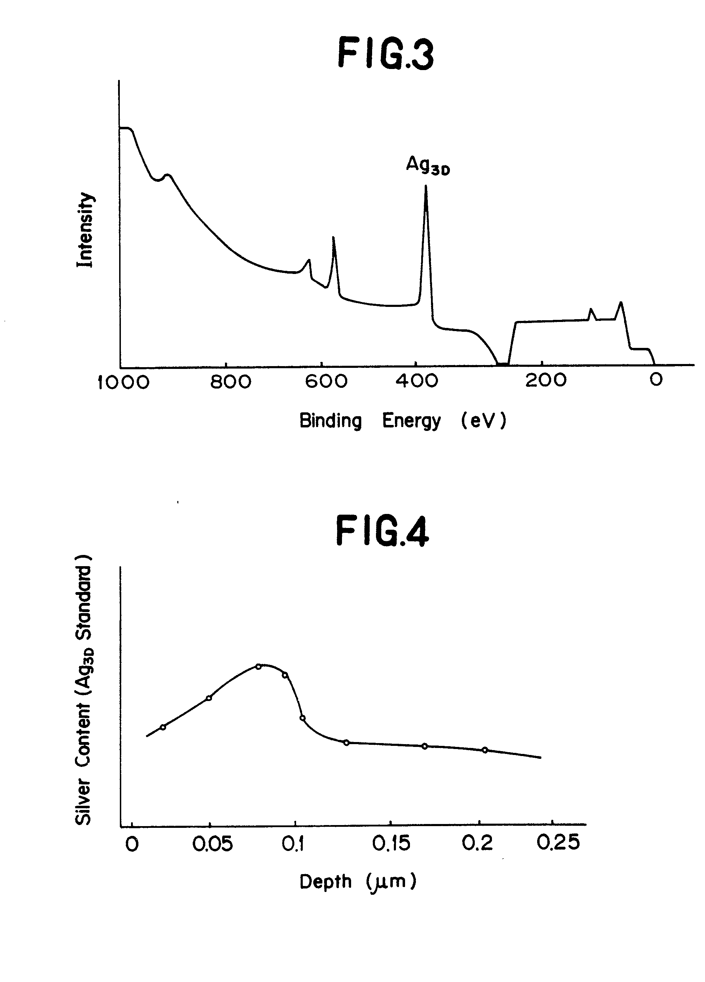

Employing a sample having a film thickness of a recording layer of 0.3 µm, which was prepared according to the same procedures as in Example 1, an analysis for a silver amount toward a thickness thereof was carried out according to electron spectroscopy for chemical analysis (ESCA). The ESCA spectrum and profile toward the thickness are shown in the accompanied drawings which were obtained after sputtering by the use of PHI-Model-560 ESCA manufactured by Perkin-Elmer Co., Ltd. Namely, Fig. 3 shows an ESCA spectrum which was made by irradiation of an energy beam over a sample and subsequent observation an absorption spectrum of the electron orbital identified as Ag in the sample. Fig. 4 shows a profile toward the sample thickness which was made by irradiation of an energy beam over a sample and subsequent observation of relative strength of a concentration of the secondary ion generated from the sample. In this case, a sputtering speed was around 30 Å/min. In the recording layer, the physically developed silver was contained within about 0.1 µm from the surface thereof and a certain amount of colloidal silver was within a deeper position toward a support. Therefore, it can be seen that a film thickness of a physical development nucleus layer is made up so as to have precipitated silver deeper within a recording layer, in order to obtain a recording medium having a high reflectance on the support side thereof.

## Example 3

Following the same procedures as in Example 1 except that a physical development nucleus layer was coated to 0.2 µm by the use of a gold colloid solution prepared by the under-mentioned composition, there was prepared a sample of this invention having a metallic luster reflectivity.

| | |
|---|---|
| 1 % Aqueous solution of polyvinyl alcohol (PVA) | 10 ml |
| 0.2 % Aqueous solution of chloroauric acid | 50 ml |
| 1 % Aqueous solution of sodium borohydride | 10 ml |

A solution having the above-defined composition was admixed and stirred at room temperature to yield a gold colloid solution. In this sample, a reflectance through a polymethyl methacrylate support plate was 45.0 % with He-Ne laser of 6328 Å.

The so-obtained recording medium sample of this invention was subjected to recording or writing and reading in the same manner as in Example 1 to give favourable results as seen in Example 1.

Example 4

Following the same procedure as in Example 3 except that a film thickness of a physical development nucleus-containing layer was 0.05 µm. On the physical development nucleus-containing layer, a copper bromoiodide (I) emulsion (Br : I = 97 : 3) was coated with a thickness of 2 µm.

This sample was developed without expression at 25 °C for 3 minutes with a developer having the following composition, and washed with a hot water at 37 °C to strip off the emulsion layer, thereby producing a sample.

- 14 -

<u>Developer</u>

| 4-amino-phenol sulfate | 0.085 mol |
| glycine | 0.2 mol |
| Sodium methaborate | 0.026 mol |

Water added to make up 1 ℓ.

In this sample, a reflectance through a polymethyl methacrylate support plate was 40.0 % with He-Ne laser of 6328 Å and a film thickness was 0.08 µm.

The so-obtained recording medium of this invention was subjected to recording and reading in the same manner as in Example 1 and the good results as in Example 1 were obtained.

0103401

What is claimed is:

1. In a recording medium in which an energy beam is irradiated onto a reflective component-containing layer provided on a support through said support to reduce a reflectivity of said reflective component-containing layer, the improvement wherein said reflective component-containing layer is formed through physical development of a physical development nucleus-containing layer on said support and said reflective component-containing layer has a film thickness of 0.01 µm to 0.5 µm.

2. A recording medium according to Claim 1, wherein said physical development nucleus-containing layer contains as physical development nucleus a member selected from a noble metal and a sulfide of a heavy metal.

3. A recording medium according to Claim 1, wherein a metallic compound supplying a metal atom to physical development nucleus through physical development is a silver halide or a copper halide.

4. A recording medium according to Claim 1, wherein said recording medium has a reflectance to a reflective light through said support of 10 to 70 %.

5. A recording medium according to Claim 1, wherein said energy beam is a laser beam.

6. A recording medium according to Claim 1, wherein said film thickness is 0.01 µm to 0.09 µm.

7. A recording medium according to Claim 3, wherein said film thickness is 0.01 µm to 0.09 µm.

# FIG.I

# FIG.2

# FIG.3

Intensity

Ag$_{3D}$

1000   800   600   400   200   0

Binding   Energy   (eV)

# FIG.4

Silver Content (Ag$_{3D}$ Standard)

0   0.05   0.1   0.15   0.2   0.25

Depth (μm)